# EUROPEAN PATENT APPLICATION

(11) **EP 3 153 988 A1**
(43) Date of publication of application: **12.04.2017**
(21) Application number: 15306575.0
(22) Date of filing: 06.10.2015
(51) Int. Cl.: G06F 21/64

(54) **DEVICE AND METHOD FOR INSERTING DATA INTO INTEGRITY PROTECTED SOFTWARE CODE**

(71) Applicant: Thomson Licensing, 92130 Issy-les-Moulineaux (FR)
(72) Inventor: SALMON-LEGAGNEUR, Charles, 35576 Cesson-Sévigné (FR); KARROUMI, Mohamed, 35576 Cesson-Sévigné (FR)
(74) Representative: Browaeys, Jean-Philippe

(57) **Abstract**

Data is inserted in software code protected by a checksum calculated using a reversible checksum algorithm by a processing unit (210) of a device (200) that obtains the software code including code areas, at least one reserved area (R₁-Rₙ) and a compensatory area (Rₛₑₙₜᵢₙₑₗ), inserts (S32) data into the at least one reserved area, obtains (S51) a first checksum value over the code areas, inserts (S35, S54) into the compensatory area (Rₛₑₙₜᵢₙₑₗ) a compensatory value that compensates for the at least one reserved area so that a checksum calculated over the software code is equal to the first checksum value, and outputs the software code including the code areas, the at least one reserved area (R₁-Rₙ) and the compensatory area (Rₛₑₙₜᵢₙₑₗ).

## Description

### TECHNICAL FIELD

The present disclosure relates generally to cryptography and in particular to checksums for digital data.

### BACKGROUND

This section is intended to introduce various aspects of art, which may be related to various aspects of the present disclosure that are described and/or claimed below. This discussion is believed to be helpful in providing background information to facilitate a better understanding of the various aspects of the present disclosure. Accordingly, it should be understood that these statements are to be read in this light, and not as admissions of prior art.

The integrity of digital data can be verified using different checksum techniques such as ADLER32 and CRC32. These checksum techniques take an input string of arbitrary length and break it into blocks that are processed iteratively until a final checksum is obtained.

The digital data for verification can be the computer code of an application. This can ensure that the code executed by a processor has not been corrupted. However, since the checksum techniques are not one-way functions, the code can be intentionally modified by an attacker who also modifies the checksum that is checked unless the checksum technique comprises the use of a secret key.

The process of protecting the integrity of the application is commonly applied to the binary code once the code has been compiled. A post-build tool computes the checksum of a selected region within the binary and inserts the checksum reference value inside the binary. The checksum reference value cannot be included in the selected region as its presence impact the checksum of the selected region. For this reason, selected regions and checksum reference values are located apart; for example, selected regions are in the CODE sections, and checksum values are inserted into the DATA section.

A problem can appear when a binary is provided with information specific to the binary within the code. This may for example happen when the binary is personalized, for example with secrets such as keys, especially when the entity that personalizes the code is not the manufacturer of the code. Given that different information yields different checksums, the checksum has to be recalculated for each different version of the binary. Another problem can appear when checksum verification functions are nested within the code.

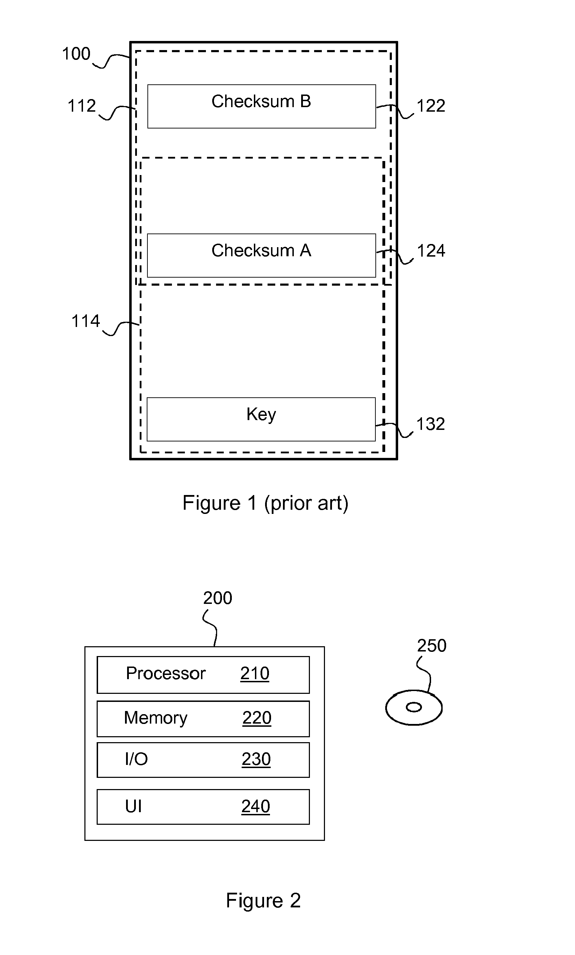

These problems are illustrated in Figure 1 that illustrates a section of code with two overlapping regions and checksum reference values according to the prior art. The section of code 100 comprises two regions, region A 112 and region B 114, two checksum reference values, checksum A 124 and checksum B 122, and a key 132. As can be seen, region A comprises checksum A and checksum B, while region B comprises checksum A and the key. This means that the integrity for region A should be generated over the whole region minus checksum A and checksum B. Likewise, the integrity for region B should be generated over the whole region minus checksum A and the key. As the checksums and, often, the key are introduced after the checksum calculations, it is necessary to discard the inserted checksums and the key in subsequent checksum calculations.

The assumption of a continuous region of code on which the integrity can be computed is then no longer valid. A checksum calculated over such a continuous region is likely to be incorrect since checksums of other blocks inserted at post-build time affect one another.

Many existing commercial products offer integrity protection. Protecting an application using such products usually requires the interaction of a security expert, who must define a specific script to protect the application. To solve the discontinuity issue in protected regions, the security expert should declare a list of excluded regions, which are subtracted from the protected region when the integrity check is performed. This means that the binary must embed a table of information that describes locations to exclude, which in itself leaks information to an attacker that is then able to list the potential locations where sensitive information and secrets can be stored.

In addition, even if the information itself (the perimeter of the protection regions, start address, length, the value of the checksum, etc.) does not contain any confidential or sensitive data, it nevertheless presents a weakness that can be exploited by a dynamic attack. An attacker may use a debugger to place hardware breakpoints on the checksum location and monitor read/write accesses to this location. The attacker may then detect the calling integrity routines and their invocation points in order to stub them.

Today, advanced temporal monitoring tools use new, advanced technologies, like hypervisors or virtual machines to track the application stealthily, i.e., the read/write memory accesses of each function. In the previous example, the integrity routine makes no read access to the excluded locations, which renders an oracle attack possible. Each non-read address becomes suspicious and gives a hint as to where to find sensitive information such as information inserted at post-build time.

It will be appreciated that it is desired to have a solution that overcomes at least part of the prior art problems related to integrity of digital data, in particular in software applications. The present principles provide such a solution.

### SUMMARY OF DISCLOSURE

In a first aspect, the present principles are directed to a device for inserting data in software code protected by a checksum calculated using a reversible checksum algorithm. The device comprises a hardware processing unit configured to obtain the software code including code areas, at least one reserved area and a compensatory area, insert data into the at least one reserved area, obtain a first checksum value over the code areas, and insert into the compensatory area a compensatory value that compensates for the at least one reserved area so that a checksum calculated over the software code is equal to the first checksum value; and an interface configured to output the software code including the code areas, the at least one reserved area and the compensatory area.

Various embodiments of the first aspect include:
- That the processing unit is further configured to calculate the compensatory value.
- That the processing unit is further configured to calculate the compensatory value from a difference between the first checksum and a second checksum computed over the code areas and the at least one reserved areas. The checksum algorithm can be CRC and the processing unit is then configured to calculate the compensatory value by computing an XOR between the first checksum and the second checksum. The checksum algorithm can also be CBC-MAC and the processing unit is then configured to calculate the compensatory value by computing an XOR between the first checksum and a decryption, using a key, of the second checksum.
- That the processing unit is further configured to compute the first checksum using the reversible checksum algorithm.
- That the processing unit is further configured to obtain the software code by inserting the at least one reserved area and the compensatory area into an unmodified software code.

In a second aspect, the present principles are directed to a method for inserting data in software code protected by a checksum calculated using a reversible checksum algorithm. A hardware processing unit of a device obtains the software code including code areas, at least one reserved area and a compensatory area, inserts data into the at least one reserved area, obtains a first checksum value over the code areas, inserts into the compensatory area a compensatory value that compensates for the at least one reserved area so that a checksum calculated over the software code is equal to the first checksum value, and outputs the software code including the code areas, the at least one reserved area and the compensatory area.

Various embodiments of the second aspect include:
- Calculating the compensatory value. The compensatory value can be calculated from a difference between the first checksum and a second checksum computed over the code areas and the at least one reserved areas. The checksum algorithm can be CRC and the compensatory value is then calculated by computing an XOR between the first checksum and the second checksum. The checksum algorithm can be CBC-MAC and the compensatory value is then calculated by computing an XOR between the first checksum and a decryption, using a key, of the second checksum.
- That the first checksum is obtained by computing the first checksum using the reversible checksum algorithm.

In a third aspect, the present principles are directed to a computer program comprising program code instructions executable by a processor for implementing the steps of a method according to the second aspect.

In a fourth aspect, the present principles are directed to a computer program product which is stored on a non-transitory computer readable medium and comprises program code instructions executable by a processor for implementing the steps of a method according to the second aspect.

### BRIEF DESCRIPTION OF DRAWINGS

Preferred features of the present principles will now be described, by way of non-limiting example, with reference to the accompanying drawings, in which
Figure 1 illustrates a section of code with two overlapping regions and checksum reference values according to the prior art;
Figure 2 illustrates an apparatus 200 for protecting software code according to the present principles;
Figure 3 illustrates an example of a protection method according to the present principles

### DESCRIPTION OF EMBODIMENTS

Figure 2 illustrates an apparatus 200 for protecting software code according to the present principles. The apparatus 200 comprises at least one hardware processing unit ("processor") 210, memory 220, at least one communications interface (I/O) 230 configured to communicate with other devices and a user interface (UI) 240. The skilled person will appreciate that the illustrated apparatus is simplified for reasons of clarity. A non-transitory storage media 250 stores instructions that, when executed by a processor (such as processor 210), protect software code as further described hereinafter.

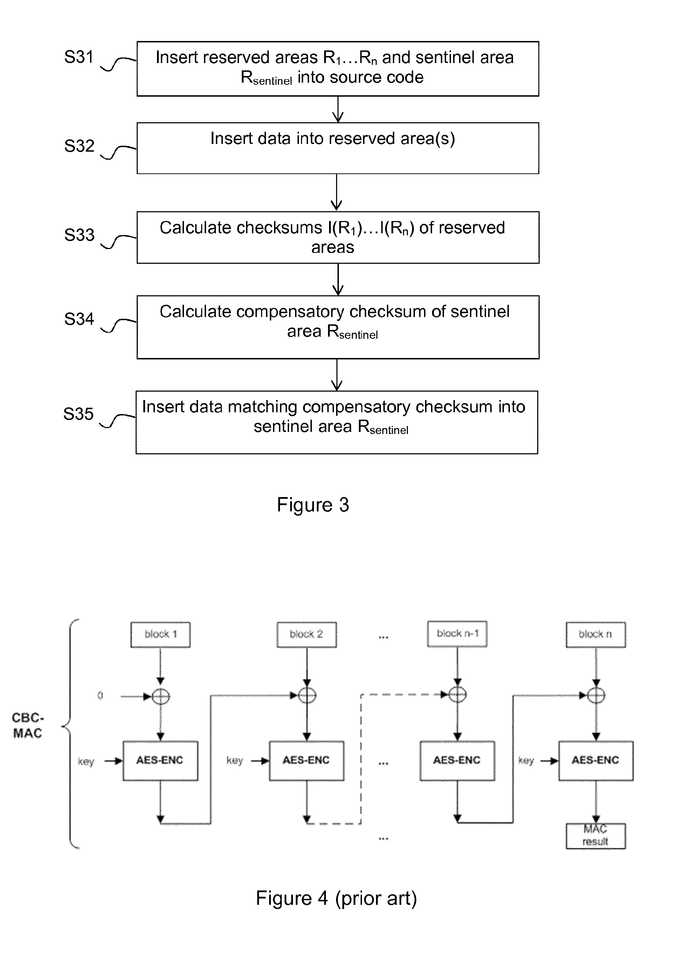

Figure 3 illustrates an example of a protection method according to the present principles.

In step S31, the processor 210 of Figure 2 inserts reserved areas and a sentinel area into source code. Step S31 further compiles the source code to obtain a binary with reserved areas: Rᵢ...Rₙ and Rₛₑₙₜᵢₙₑₗ. In one example, areas may be reserved by calling one or more macros that insert dead code instructions. This permits reservation of room in which data can be inserted at post-build time.

In step S32, the processor 210 inserts data in at least one reserved area. This data may be, for example, checksums and keys (both secret and public).

In step S33, the processor 210 determines checksums for the reserved areas, I(R₁)...I(Rₙ).

In step S34, the processor 210 determines a compensatory checksum I(Rₛₑₙₜᵢₙₑₗ) that the sentinel area Rₛₑₙₜᵢₙₑₗ should have in order to compensate for the checksums for the reserved areas I(R₁)...I(Rₙ). In other words, from a checksum point of view, I(Rₛₑₙₜᵢₙₑₗ) balances our I(R₁)...I(Rₙ) so that the overall impact of the reserved areas and the sentinel area on the checksum is zero.

In step S35, the processor 210 generates data for which the checksum matches the checksum of the sentinel area Rₛₑₙₜᵢₙₑₗ and inserts the data into the sentinel area Rₛₑₙₜᵢₙₑₗ. How this may be done is explained hereinafter.

The source code with the reserved areas and the sentinel area can then be output.

It can thus be seen that according to the present principles, the insertion of secrets, such as keys, at postbuild time and the integrity protection are uncorrelated. The insertion of data is a transparent operation that does not change integrity value since the sentinel area compensates for the inserted data.

It will be appreciated that the principles are easily adapted to the use of a sentinel area that comprises a plurality of blocks that are separated from one another. This can be seen as having a plurality of sentinel areas; the contribution of the checksums of the sentinel areas together cancel out the checksums of the reserved areas.

In a first example, the checksums are calculated using a Cyclic Redundancy Check (CRC) such as Adler-32 or CRC-32. The checksum determination discussed herein relates to step S33 of Fig. 3.

Using CRC-32, each reserved area adds a sequence of 4 bytes to the final checksum. In a string of integers with a first reserved area at position i and a second reserved area at position j it is always possible to find, for any position k, data such that data[k] = 0 - (data[i] + data[j]) = ^ (data[i] + data[j]).

To limit collision attacks, CRCs are sometimes position-dependent. Position-dependent CRC include a checksum of a byte at position i that is not equal to the integrity value of the same byte at position j. However, it is possible, with knowledge of the values of i, j, and k, to inject in data[k] a value to compensate for the combination of data[i]...data[j].

In a second example, the checksums determined in step S33 are calculated using a cipher-based Message Authentication Code (MAC), such as OMAC, CBC-MAC and PMAC.

The CBC-MAC algorithm is based on a symmetrical block cipher, such as AES-128, which uses an encryption key. To calculate a CBC-MAC checksum, the input is encrypted using AES in CBC mode with zero as initialization vector. The final encrypted block is the checksum, i.e. the MAC. Figure 4 illustrates an exemplary computation of the CBC-MAC for input data comprising n blocks according to the prior art.

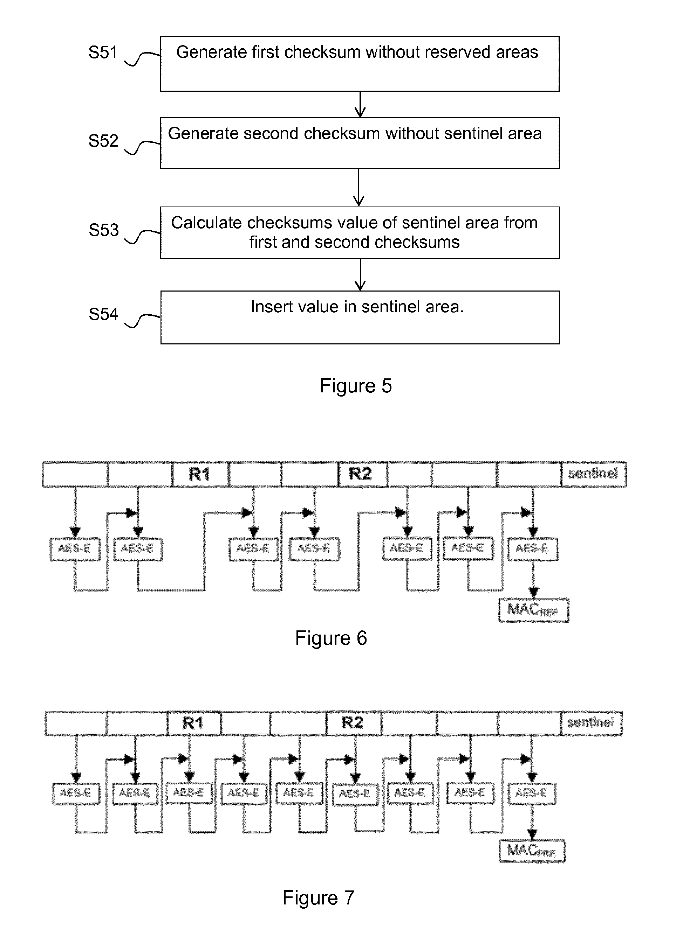

An aspect of present principles relate to generating a CBC-MAC based on a modified computation method illustrated in Figure 5.

In step S51, a first checksum, MAC_{REF}, is generated over the input data except for the reserved areas, i.e. R₁, R₂ and Rₛₑₙₜᵢₙₑₗ in an example illustrated in Figure 6. The reserved areas are simply skipped as if they did not exist; for example the block just before R₁ is followed by the block just after R₁. The first checksum may also be obtained from another device, e.g. if it is delivered together with code with empty reserved areas.

In step S52, a second checksum, MAC_{PRE}, is generated over the input data except for the sentinel area Rₛₑₙₜᵢₙₑₗ, illustrated, continuing the example, in Figure 7. As in step S51, the sentinel area is treated as if it did not exist.

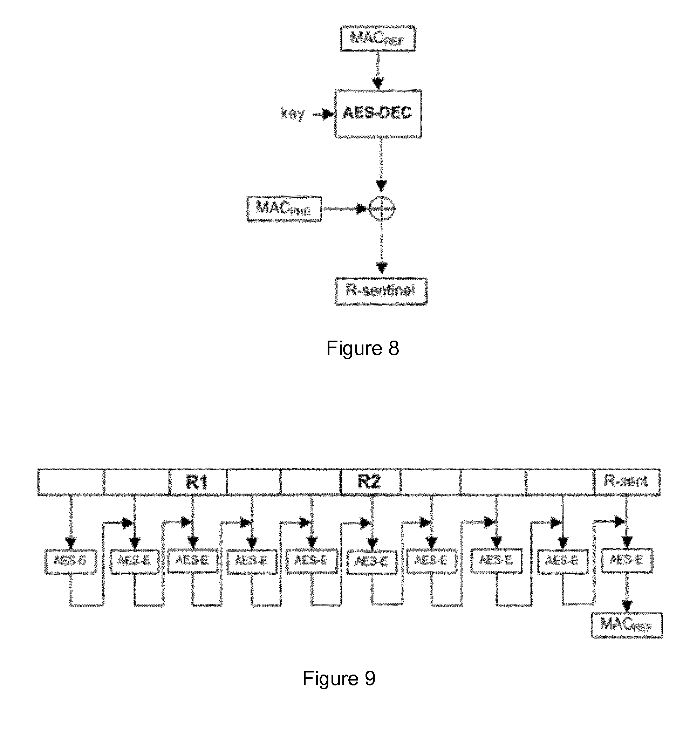

In step S53, the sentinel area Rₛₑₙₜᵢₙₑₗ is calculated from the first checksum, MAC_{REF}, and the second checksum, MAC_{PRE}. For CBC-MAC, as illustrated in Figure 8, the value of the sentinel area Rₛₑₙₜᵢₙₑₗ is computed as an XOR between the second checksum MAC_{PRE} and the decryption of the first checksum MAC_{REF}. Formally put, Rₛₑₙₜᵢₙₑₗ = MAC_{PRE} ⊕ AES-DEC{key} (MAC_{REF}).

In step S54, the value of the sentinel area Rₛₑₙₜᵢₙₑₗ is inserted in its reserved block.

It will be appreciated that the way the sentinel area Rₛₑₙₜᵢₙₑₗ is constructed permits removal of the effect of the reserved areas on the checksum. Interestingly, the verification process, illustrated in Figure 9, remains the same as the conventional verification process: CBC-MAC on the new modified input gives the expected result, i.e. MAC_{REF}. This means that integrity verification can be performed using already deployed cryptographic libraries that implement CBC-MAC methods. As the call to the AES-ENC function is always performed whether or not the code block belongs to a reserved area, no information is revealed by the verification.

The CBC-MAC technique can be applied to an improved versions of CBC-MAC such as One key CBC-MAC (OMAC, see http://www.nuee.nagoya-u.ac.jp/labs/tiwata/omac/omac.html) and Parallelizable MAC (PMAC, see http://www.cs.ucdavis.edu/∼rogaway/ocb/pmac.htm).

The CBC-MAC method described in Figure 5 can be adapted to work with padding. An exemplary conventional padding method adds a block to the left ("pre-padded block") comprising the binary representation of the number of bits in the unpadded message and pads the rightmost block ("padded block") with the number of zeros needed to make the total message a multiple of the cipher block size, i.e. a multiple of 16 for AES.

To deal with such padding, the described CBC-MAC method is modified slightly. The pre-padded block contains a bit length that is equal to the bit length of the unpadded message including the reserved areas.

The first checksum MAC_{REF} is calculated over the input excluding the reserved areas and the padded block, but including the pre-padded block.

The second checksum MAC_{PRE} is calculated over the input including the pre-padded block and reserved areas R₁-Rₙ, but excluding the sentinel area and the padded block. The value of the sentinel area is computed as an XOR between the MAC_{PRE} and the decryption of MAC_{REF}, as described. Then, a final checksum MAC_{RES} is obtained as the encryption of MAC_{REF} XOR-ed with the padded block. Formally, MAC_{RES} = AES-ENC{key} (MAC_{REF} ⊕ padded block).

The value of the sentinel area is then inserted into its reserved area, i.e. the penultimate block, and the padded block is appended.

As can be seen, the technique makes it possible to have the sentinel area in any position between Rₙ and the padded block (if used).

It will thus be appreciated that the present principles provide a solution for inserting data into a continuous data area while respecting an already calculated reversible checksum for the area.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A device (200) for inserting data in software code protected by a checksum calculated using a reversible checksum algorithm, the device (200) comprising:
- a hardware processing unit (210) configured to:
- obtain the software code including code areas, at least one reserved area (R₁-Rₙ) and a compensatory area (Rₛₑₙₜᵢₙₑₗ);
- insert data into the at least one reserved area;
- obtain a first checksum value over the code areas; and
- insert into the compensatory area (Rₛₑₙₜᵢₙₑₗ) a compensatory value that compensates for the at least one reserved area so that a checksum calculated over the software code is equal to the first checksum value; and
- an interface (230) configured to output the software code including the code areas, the at least one reserved area (R₁-Rₙ) and the compensatory area (Rₛₑₙₜᵢₙₑₗ).

2. The device of claim 1, wherein the processing unit is further configured to calculate the compensatory value.

3. The device of claim 2, wherein the processing unit is further configured to calculate the compensatory value from a difference between the first checksum and a second checksum computed over the code areas and the at least one reserved areas.

4. The device of claim 3, wherein the checksum algorithm is CRC and the processing unit is configured to calculate the compensatory value by computing an XOR between the first checksum and the second checksum.

5. The device of claim 3, wherein the checksum algorithm is CBC-MAC and the processing unit is configured to calculate the compensatory value by computing an XOR between the first checksum and a decryption, using a key, of the second checksum.

6. The device of claim 1, wherein the processing unit is further configured to compute the first checksum using the reversible checksum algorithm.

7. The device of claim 1, wherein the processing unit is further configured to obtain the software code by inserting the at least one reserved area and the compensatory area into an unmodified software code.

8. A method for inserting data in software code protected by a checksum calculated using a reversible checksum algorithm, the method comprising in a hardware processing unit (210) of a device (200):
- obtaining the software code including code areas, at least one reserved area (R₁-Rₙ) and a compensatory area (Rₛₑₙₜᵢₙₑₗ);
- inserting (S32) data into the at least one reserved area;
- obtaining (S51) a first checksum value over the code areas;
- inserting (S35, S54) into the compensatory area (Rₛₑₙₜᵢₙₑₗ) a compensatory value that compensates for the at least one reserved area so that a checksum calculated over the software code is equal to the first checksum value; and
- outputting the software code including the code areas, the at least one reserved area (R₁-Rₙ) and the compensatory area (Rₛₑₙₜᵢₙₑₗ).

9. The method of claim 8, further comprising calculating (S34, S53) the compensatory value.

10. The method of claim 9, wherein the compensatory value is calculated from a difference between the first checksum and a second checksum computed over the code areas and the at least one reserved areas.

11. The method of claim 10, wherein the checksum algorithm is CRC and the compensatory value is calculated by computing an XOR between the first checksum and the second checksum.

12. The method of claim 10, wherein the checksum algorithm is CBC-MAC and the compensatory value is calculated by computing an XOR between the first checksum and a decryption, using a key, of the second checksum.

13. The method of claim 8, wherein the first checksum is obtained by computing the first checksum using the reversible checksum algorithm.

14. Computer program comprising program code instructions executable by a processor for implementing the steps of a method according to at least one of claims 8 to 13.

15. Computer program product which is stored on a non-transitory computer readable medium and comprises program code instructions executable by a processor for implementing the steps of a method according to at least one of claims 8 to 13.
